# EUROPEAN PATENT APPLICATION

(11) **EP 4 310 631 A1**
(43) Date of publication of application: **24.01.2024**
(21) Application number: 23183953.1
(22) Date of filing: 06.07.2023
(51) Int. Cl.: G06F 1/16

(54) **SYSTEMS HAVING A DISPLAY UNIT AND INTERCHANGEABLE BEZEL TRIM PIECES FOR SECURING THERETO**

(30) Priority: 22.07.2022 US 202263369180 P; 22.06.2023 US 202318339432
(71) Applicant: Honeywell International Inc., Charlotte, NC 28202 (US)
(72) Inventor: HINK, Michael, Charlotte, 28202 (US); BIALEK, Jason, Charlotte, 28202 (US); KEBERLE, Kelsey, Charlotte, 28202 (US); AMSDEN, Justin, Charlotte, 28202 (US); FISHER, Zachary, Charlotte, 28202 (US)
(74) Representative: Lucas, Peter Lawrence

(57) **Abstract**

Systems are provided for modification of display units. The system comprises a display unit that includes a touchscreen configured to display a graphical user interface thereon and detect user physical interaction therewith and a bezel surrounding edges of the touchscreen. The bezel includes a modular frame having a connection system thereon. The system also includes one or more bezel trim pieces configured to releasably couple to the modular frame of the bezel via the connection system thereon.

## Description

### CROSS REFERENCE TO RELATED APPLICATION

The present application claims benefit of prior filed U.S. Provisional Patent Application No. 63/369,180, filed July 22, 2022, which is hereby incorporated by reference herein in its entirety.

### TECHNICAL FIELD

The present invention generally relates to electronic displays, and more particularly relates to display systems that include a display unit having a bezel with a modular frame and one or more bezel trim pieces configured to be secured to the modular frame to provide additional functionality to the display unit.

### BACKGROUND

Modern electronic displays for vehicles, such as aircraft, automobiles, marine vessels, and trains, are capable of displaying a significant amount of information, such as vehicle position, navigation, and terrain information. In the case of an aircraft, many modern flight deck displays are utilized to provide a number of different displays from which the user can obtain information or perform functions related to, for example, navigation, flight planning, guidance and navigation, and performance management.

While such electronic displays have provided notable improvements to the operation of modem vehicles, different types of vehicles may require different functionality from the electronic displays, and/or different operators of such vehicle may have different preferences for the electronic displays. As such, significant modification of the electronic displays and associated components of the vehicles may be necessary for implementation therein and/or to accommodate operator preferences. This may add to the cost and complexity of manufacturing and maintaining such vehicles. In the alternative, lack of such modifications (e.g., to avoid such costs and complexity) may hinder the functionality and/or ease of operation of such vehicles.

Hence, there is a need for systems that include electronic displays for vehicles that promote ease of customization of the functionality of the electronic displays and/or other systems of the vehicles.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A system is provided for modification of display units. The system comprises a display unit that includes a touchscreen configured to display a graphical user interface thereon and detect user physical interaction therewith and a bezel surrounding edges of the touchscreen. The bezel includes a modular frame having a connection system thereon. The system also includes one or more bezel trim pieces configured to releasably couple to the modular frame of the bezel via the connection system thereon.

Furthermore, other desirable features and characteristics of the [system/method] will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 presents a perspective view of a system that includes a display unit and a pair of bezel trim pieces configured to be secured to a bezel of the display unit in accordance with various embodiments;
FIG. 2 presents a perspective view of the system of FIG. 1 with the pair of bezel trim pieces secured to the bezel of the display unit;
FIG. 3 presents a perspective view of the system of FIG. 1 with a second pair of bezel trim pieces secured to the bezel of the display unit;
FIG. 4 presents a perspective view of the system of FIG. 1 with various bezel trim pieces configured to be secured to the bezel of the display unit in accordance with various embodiments; and
FIG. 5 presents a perspective view of the system of FIG. 1 configured for use as an aircraft flight display in accordance with various embodiments.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

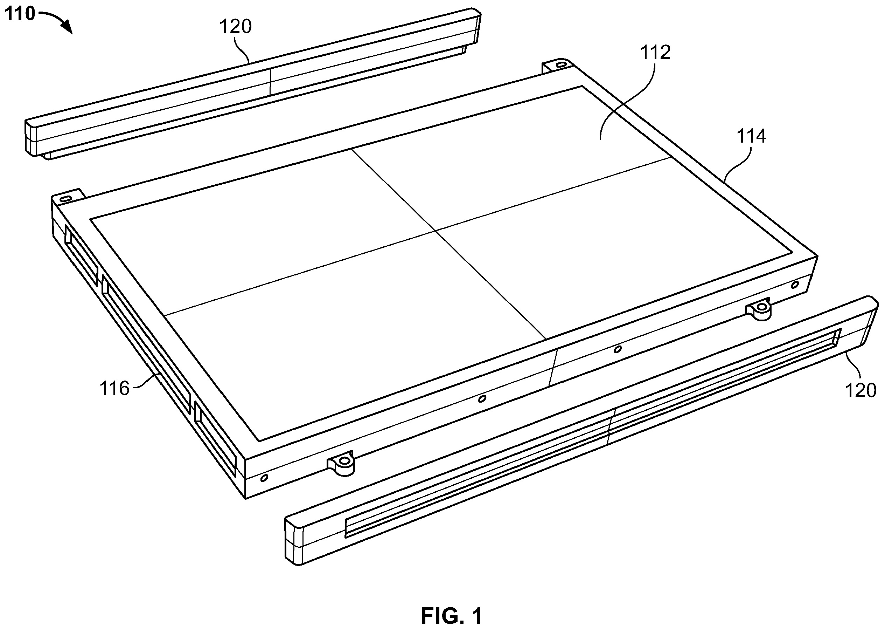

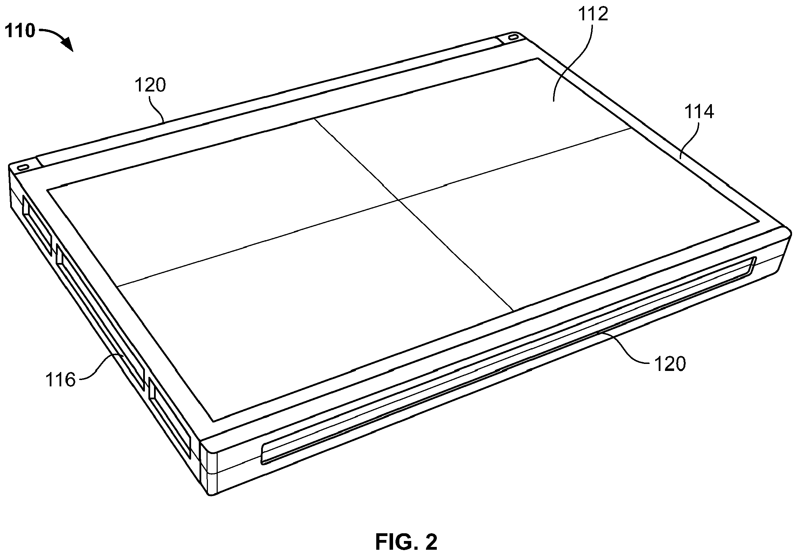

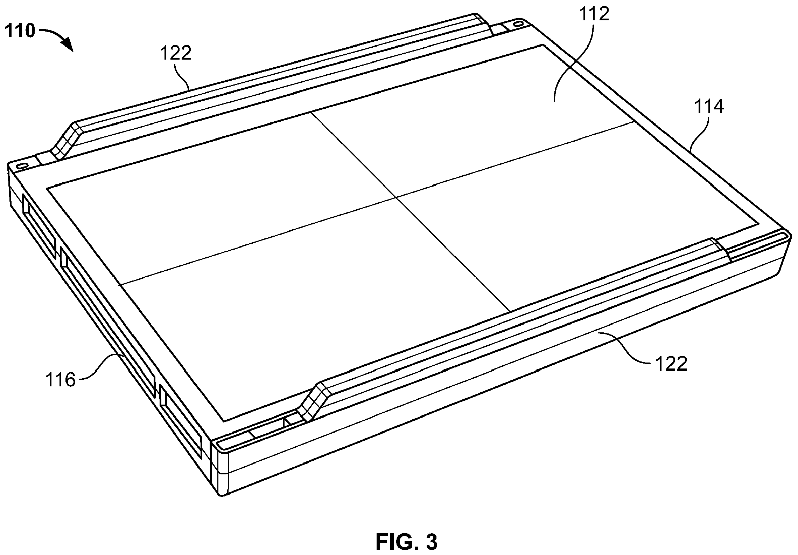

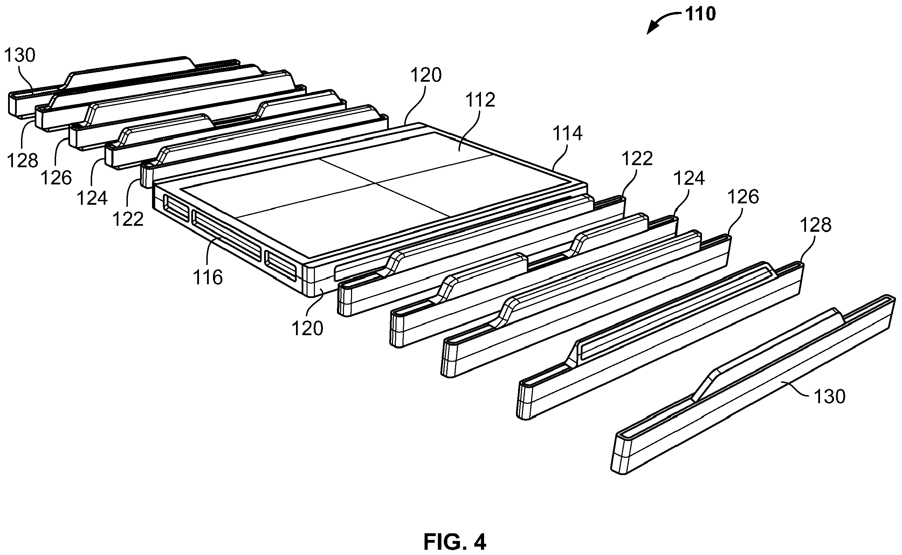

FIGS. 1-5 represent various aspects of a display system 100 in accordance with a nonlimiting embodiment. The display system 100 includes a display unit 110 and various interchangeable bezel trim pieces configured to be releasably coupled to the display unit 110. The display unit 110 may be any type of electronic device that employs a touch screen display user interface. For example, the exemplary embodiments described herein may be employed in applications including, but not limited to, vehicles and heavy machinery, small handheld mobile devices such as smart phones, aircraft systems such as cockpit displays and other aviation implementations, and various other industrial, commercial, aviation, and consumer electronics-based implementations. The display unit 110 includes a touchscreen 112 and a bezel 114.

For convenience, the display unit 110 will be referred to herein as having a front face comprising the touchscreen 112, a rear face opposite the front face, a top, a bottom, and a pair of oppositely disposed sides between the top and the bottom. However, it should be understood that these terms are merely used herein to promote ease of describing the display system 100, and are not intended to limit the construction, installation, or operation of the display system 100.

The touchscreen 112 is configured for displaying visual data, images, and/or one or more graphical user interfaces (GUIs). The touchscreen 112 may include any type of touch screen sensing technology, including but not limited to capacitive, resistive, infrared, surface acoustic wave, and embedded optical.

Edges and adjacent surfaces of the touchscreen 112 are surrounded by the bezel 114. In various embodiments, the bezel 114 may function to support and/or protect the touchscreen 112. In various embodiments, the bezel 114 may be a portion of a housing that contains various components configured for performing certain functions associated with the operation of the display unit 110.

In various embodiments, the display unit 110 includes a controller that includes at least one processor, a communication bus, a computer readable storage device or media, and any other components required for the operation thereof. The processor can be any custom made or commercially available processor, a central processing unit (CPU), a graphics processing unit (GPU), an auxiliary processor among several processors associated with the controller, a semiconductor-based microprocessor (in the form of a microchip or chip set), a macroprocessor, any combination thereof, or generally any device for executing instructions. The computer readable storage device or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions, used by the controller in controlling the display unit 110. The bus serves to transmit programs, data, status and other information or signals between the various components of the display unit 110. The bus can be any suitable physical or logical means of connecting computer systems and components. This includes, but is not limited to, direct hard-wired connections, fiber optics, infrared, and wireless bus technologies.

The instructions may include one or more separate programs, each of which comprises an ordered listing of executable instructions for implementing logical functions. The instructions, when executed by the processor, receive and process signals from the components of the display unit 110 and/or other connected devices, perform logic, calculations, methods and/or algorithms for operating as a human-machine interface, and generate data to store information based on the logic, calculations, methods, and/or algorithms. Embodiments of the display unit 110 can include any number of controllers that communicate over any suitable communication medium or a combination of communication mediums and that cooperate to process the sensor signals, perform logic, calculations, methods, and/or algorithms, and generate the data.

In other various embodiments, the display unit 110 is configured such that certain processes noted above, for example, related to the controller and/or the computer readable storage device, are performed by remote electronic devices in communication with the display unit 110. In such embodiments, the functions of components of the display unit 110 may be limited to, for example, displaying the visual data, images, and/or one or more graphical user interfaces (GUIs) on the touchscreen 112, detecting user input provided through interaction with the touchscreen 112, and transmitting user input data to the remote electronic devices.

In various embodiments, the display unit 110 may include any number of input/output ports, connections, and/or wireless or wired communication systems configured to provide for communication with remote electronic devices.

For the sake of brevity, various conventional techniques related to graphics and image processing, touch screen displays, and other functional aspects of certain systems and subsystems (and the individual operating components thereof) of the display unit 110 may not be described in detail herein. However, it should be understood that the display unit 110 may be configured to incorporate one or more of such conventional techniques.

The bezel 114 includes a modular frame 116 that comprises a connection system configured to releasably and independently secure various interchangeable bezel trim pieces (e.g., 120, 122, 124, 126, 128, 130, 132, and 134) thereto. In various embodiments, the bezel trim pieces are configured to be secured to the bezel 114 at one or more of the top, the bottom, the sides, front face, and/or the rear face of the display unit 110. The bezel trim pieces may be secured to the bezel 114 via the connection system by various means, such as but not limited to the use of various fasteners including, for example, hook and loop fasteners, magnetic fasteners, snap fasteners, interlocking features, bolts, and screws. As a nonlimiting example, FIG. 1 represents four holes present in the bottom of the display unit 110 that are configured to receive bolts, screws, or the like to secure one of the bezel trim pieces thereto.

The bezel trim pieces may include various shapes and sizes. For example, the bezel trim pieces may include bodies having exterior shapes that are generally straight, curved, L-shaped, rectangular, T-shaped, or other various geometric or organic shapes. The bezel trim pieces may include substantially integral bodies or may be an assembly of two or more bodies. The bezel trim pieces may include one or more materials including certain polymeric, ceramic, metallic, and/or composite materials. The bezel trim pieces may include various surface textures including but not limited to substantially smooth, planar surfaces and/or surfaces that include one or more recesses, protrusions, or a combination thereof.

In various embodiments, the bezel trim pieces may to provide additional functionality to the bezel 114, for example, by providing mechanical, electrical, and/or input functionality, and/or promote the existing functionality of the display unit 110. In some embodiments, the bezel trim pieces are intended to promote an aesthetic appearance of the bezel 114. In some embodiments, the bezel trim pieces include one or more wired or wireless input devices, such as but not limited to styluses, buttons, knobs, sliders, touchpads, scroll wheels, and/or trackballs, that are configured to provide user input to the display unit 110. The input devices may include extendable and/or moveable components configured to receive user input by user interaction therewith. In such embodiments, the bezel trim pieces may include various components configured to provide the intended functionality, such as components configured to detect the user input, generate user input data based on the detected user input, and transmit the user input data to the display unit 110 and/or another remote electronic device. In some embodiments, the bezel trim pieces are configured to expand the capabilities of the display unit 110 by, for example, providing additional processing power and/or data storage. In some embodiments, the bezel trim pieces are configured to provide storage areas. In some embodiments, the bezel trim pieces are configured to provide user body stabilization by, for example, providing support for user hands, wrists, fingers, and/or arms. In such embodiments, the bezel trim pieces can include various support structures having various sizes, configurations, and locations. In various embodiments, the bezel trim pieces include textured surfaces configured to promote secure contact with a user's hands or fingers, for example, by increasing surface area or friction therewith.

FIGS. 1-5 presents various exemplary but nonlimiting bezel trim pieces 120-134, referred to hereinafter as the first through seventh bezel trim pieces and an intermediate bezel trim piece, respectively. In these examples, the bezel trim pieces 120-134 include generally rectangular, elongated bodies having one or more features such as recesses, protrusions, and textures configured to provide stabilization support for user hands, wrists, fingers, and/or arms. However, as discussed previously, the bezel trim pieces are not limited to any specific structure and therefore may have shapes, sizes, and constructions other than those presented in the figures.

For convenience, the bezel trim pieces 120-134 will be referred to herein as having an internal side configured to face a corresponding portion of the bezel 114 when coupled thereto, and an external side opposite the internal side and configured to face away from the corresponding portion of the bezel 114 when coupled thereto. In addition, the bezel trim pieces will be referred to herein as having a front edge configured to face a direction with the touchscreen 112 when coupled to the bezel 114, a rear edge opposite the front edge configured to face a direction with the rear face of the display unit 110, and a pair of side edges between the front edge and the rear edge.

The first bezel trim piece 120 is configured to provide a minimalistic aesthetic appearance by covering the connection system of the modular frame 116 without significantly extending beyond the front and rear faces or the sides of the display unit 110. A recess is provided on an exterior side of the first bezel trim piece 120 that is configured to provide a fingerhold to a user's fingers while the user is interacting with the touchscreen 112. Use of the recess may provide additional leverage to the user's hand thereby promoting comfort and/or ease of use during interaction with the touchscreen 112.

The second bezel trim piece 122 includes an elongated protrusion extending from a front edge thereof. The protrusion is configured to provide stabilization for a user's hands, wrists, fingers, and/or arms while the user is interacting with the touchscreen 112.

The third bezel trim piece 124 includes a pair of elongated protrusions extending from a front edge thereof. The pair of protrusions are spaced apart along the edge of the third bezel trim piece 124 to provide a space therebetween. The pair of protrusions are configured to provide stabilization for a user's hands, wrists, fingers, and/or arms while the user in interacting with the touchscreen 112 while simultaneously promoting access to the touchscreen 112 via the space therebetween relative to the protrusion of the second bezel trim piece 122.

The fourth bezel trim piece 126 includes an elongated protrusion extending from a front edge thereof. The protrusion extends from the body of the fourth bezel trim piece 126 at an angle such that interior side of the protrusion extends or slopes away from the touchscreen 112 when the fourth bezel trim piece 126 is secured thereto. The protrusion is configured to provide stabilization for a user's hands, wrists, fingers, and/or arms while the user in interacting with the touchscreen 112 while simultaneously promoting visibility of the touchscreen 112 relative to the protrusion of the second bezel trim piece 122.

The fifth bezel trim piece 128 includes an elongated protrusion extending from a front edge thereof. The protrusion is tapered on an exterior side thereof such that the exterior side of the protrusion extends or slopes toward from the touchscreen 112 when the fifth bezel trim piece 128 is secured thereto. Further, the exterior side of the protrusion includes a recess therein extending along a longitudinal length thereof. The recess is configured to provide a fingerhold and/or handhold for to a user's fingers or hands while the user is interacting with the touchscreen 112. Use of the recess may provide additional leverage to the user's hand thereby promoting comfort and/or ease of use during interaction with the touchscreen 112.

The sixth bezel trim piece 130 includes an elongated protrusion extending from a front edge thereof. The protrusion is formed of a material that is different than the material of the elongated body of the sixth bezel trim piece 130. The protrusion is configured to provide one or more of the above-described functions based at least in part on the material of which the protrusion is formed. For example, the protrusion may be configured to provide stabilization for a user's to hands, wrists, fingers, and/or arms while the user in interacting with the touchscreen 112 and the material from which the protrusion is formed may promote comfort of the user's hands, wrists, fingers, and/or arms. In another example, the protrusion may be configured to provide a fingerhold and/or handhold while the user in interacting with the touchscreen 112 and the material from which the protrusion is formed may promote secure contact between the user's fingers and/or hand.

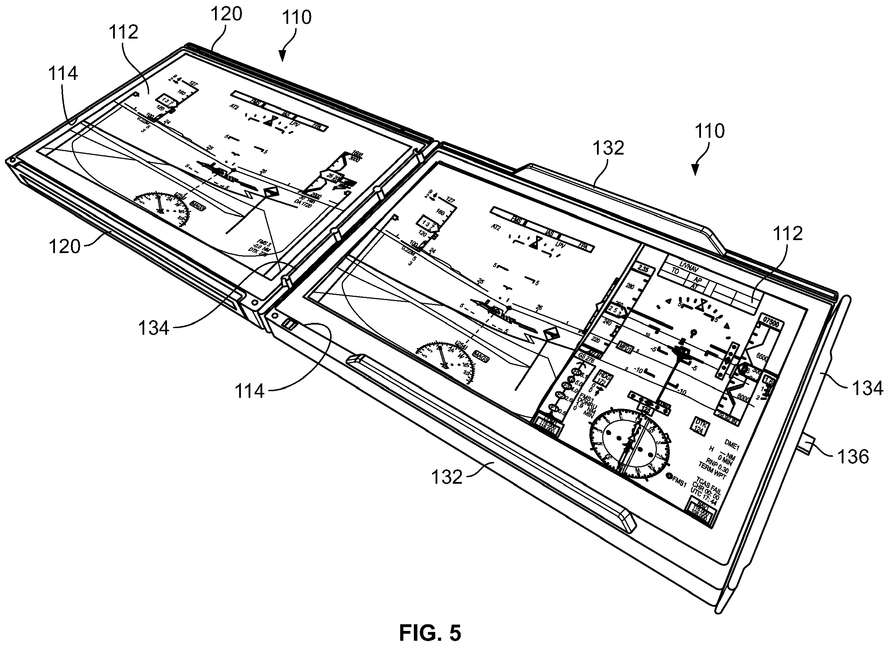

FIG. 5 represents a pair of display units 110 secured to each other with the intermediate bezel trim piece 134. The intermediate bezel trim piece 134 include a pair of tabs 136 extending from opposite sides of thereof that are configured to mate with recesses of the modular frame 116 for securing the intermediate bezel trim piece 134 to each of the display units 110. In addition, exemplary seventh bezel trim pieces 132 are secured to one of the display units 110 that includes a body having a protrusion extending therefrom and a textured surface thereon configured to promote secure contact with a user's fingers and/or hands.

In various embodiments, the display unit 110 is a communication unit, control unit, or the like for an unmanned or manned, autonomous or piloted vehicle, such as but not limited to an automobile, ship, or aircraft. For example, in various embodiments, the display unit 110 is a cockpit display of an aircraft. In such embodiments, the display unit 110 is configured to provide visual images and/or controls for operation of the aircraft, and may be configured for wired or wireless communication with one or more remote electronic devices of the aircraft, such as electronic control units, memory storage devices, sensors, power sources, etc. The bezel trim pieces secured to the display unit 110 may be configured to communicate with the display unit 110, other electronic devices of the aircraft, and/or remote electronic devices external to the aircraft (e.g., wirelessly connected devices).

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system comprising:
a display unit comprising:
a touchscreen configured to display a graphical user interface thereon and detect user physical interaction therewith; and
a bezel surrounding edges of the touchscreen, wherein the bezel includes a modular frame having a connection system thereon; and
one or more bezel trim pieces configured to releasably couple to the modular frame of the bezel via the connection system thereon.

2. The system of claim 1, wherein the one or more bezel trim pieces are each configured to couple to the modular frame and extend along a top, a bottom, or a side of the display unit.

3. The system of claim 1, at least one of the bezel trim pieces is configured to provide support to a user's hand or finger while the user interacts with the touchscreen.

4. The system of claim 1, wherein a first of the bezel trim pieces includes a body having a recess therein configured to support a user's fingers.

5. The system of claim 1, wherein a second of the bezel trim pieces includes a body having a protrusion extending therefrom configured to support a user's hands, wrists, fingers, and/or arms.

6. The system of claim 1, wherein a third of the bezel trim pieces includes a body having two or more spaced apart protrusions each extending therefrom configured to support a user's hands, wrists, fingers, and/or arms.

7. The system of claim 1, wherein a fourth of the bezel trim pieces includes a body having a protrusion extending at an angle therefrom configured to support a user's hands, wrists, fingers, and/or arms.

8. The system of claim 1, wherein a fifth of the bezel trim pieces includes a body having a protrusion extending therefrom and a recess in the protrusion configured to support a user's fingers.

9. The system of claim 1, wherein a sixth of the bezel trim pieces includes a body having a protrusion extending therefrom, wherein the protrusion is formed of a material that is different than the body and configured to support a user's hands, wrists, fingers, and/or arms.

10. The system of claim 1, wherein at least one of the bezel trim pieces includes a body having a protrusion extending therefrom, wherein the protrusion is formed of a material that is different than the body and configured to promote secure contact with a user's fingers and/or hands.

11. The system of claim 1, wherein at least one of the bezel trim pieces includes a body having a textured surface configured to promote secure contact with a user's fingers and/or hands.

12. The system of claim 1, wherein at least one of the bezel trim pieces includes a body having a protrusion extending therefrom and a textured surface thereon configured to promote secure contact with a user's fingers and/or hands.

13. The system of claim 1, wherein at least one of the bezel trim pieces includes an input device and is configured to transmit user input to the display unit in response to detecting interaction with the input device, wherein the input device is a stylus, button, knob, slider, touchpad, scroll wheel, and/or trackball.

14. The system of claim 1, wherein at least one of the bezel trim pieces includes a processor and/or a computer readable memory and is configured to allow the display unit to access and use the processor and/or the computer readable memory.

15. The system of claim 1, wherein the display unit is configured to be installed in an aircraft for controlling at least one function of the aircraft, wherein at least one of the bezel trim pieces is configured for direct or indirect communication with a remote electronic device of the aircraft, wherein at least one of the bezel trim pieces is configured for receiving power from the aircraft.
